**Europäisches Patentamt**

**European Patent Office**

**Office européen des brevets**

(11) Veröffentlichungsnummer: **0 269 810**
**A2**

## (12) EUROPÄISCHE PATENTANMELDUNG

(21) Anmeldenummer: **87114322.8**

(22) Anmeldetag: **01.10.87**

(51) Int. Cl.⁴: **B01D 50/00**

Die Bezeichnung der Erfindung wurde geändert (Richtlinien für die Prüfung im EPA, A-III, 7.3).

(30) Priorität: **15.10.86 DE 3635085**

(43) Veröffentlichungstag der Anmeldung:
**08.06.88 Patentblatt 88/23**

(84) Benannte Vertragsstaaten:
**BE CH FR GB IT LI**

(71) Anmelder: **Schmid, Rudolf Martin**
**Rupert-Mayer-Strasse 39**
**D-7303 Neuhausen a.d.F.(DE)**

(72) Erfinder: **Schmid, Rudolf Martin**
**Rupert-Mayer-Strasse 39**
**D-7303 Neuhausen a.d.F.(DE)**

(54) **Selbstreinigendes Filter für gasförmige Medien, Verfahren und Ausfuehrung dazu.**

(57) Zur Reduzierung der Staubkonzentration im Filtersystem für Gasturbinen wird ein Umlenkkragen vorgesehen. Der Luftwirbel bewirkt eine Staubeintrittsüberhöhung. Die Konzentrationsabnahme des Staubes beträgt etwa 2/3.

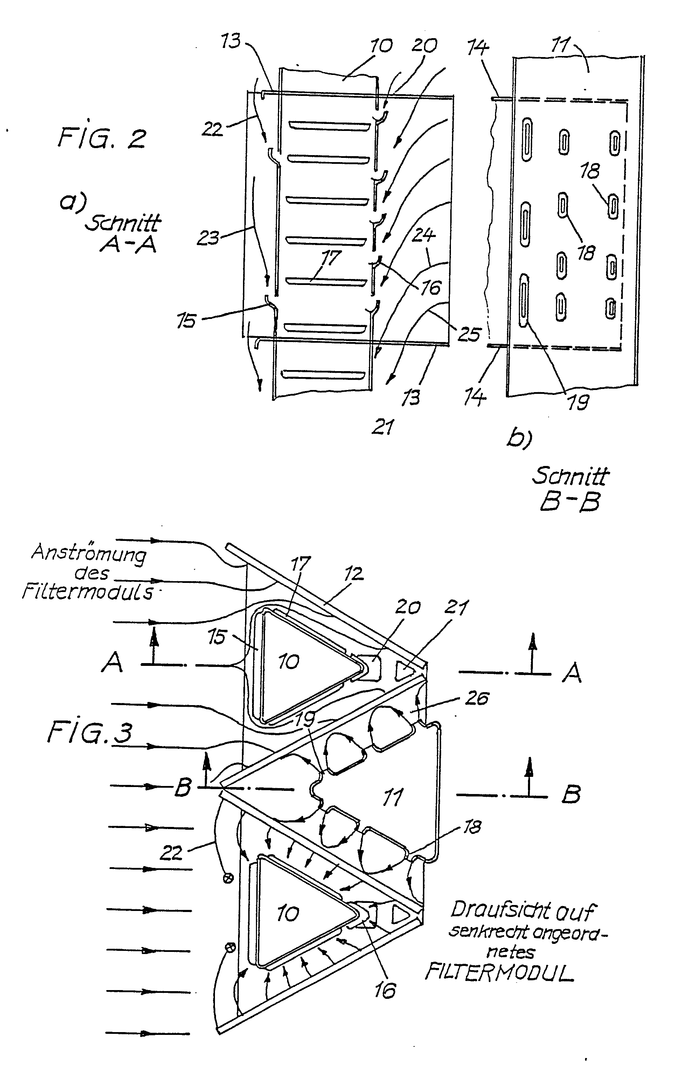

Das Verfahren für das Kompaktsystem wird in Fig. 2 und Fig. 3 dokumentiert. Man erkennt die senkrechte Anordnung der Filtermodule in V-Form, den Frischluftkanal (11), den Absaugkanal (10), die Reinigungsdüsen (18,19) und Absaugschlitze (15,16,17). Das Strömungsmodell - Anströmung, Strahlreinigung (26), Absaugeluft, Weg der Staubteilchen, z.B. (22) - ist Merkmal des erfindungsgemäßen Verfahrens. Jedes einzelne Modul hat ein identisches Strömungsbild. Eine Rezirkulation des Staubes ist ausgeschlossen.

Die auf 1/3 gesenkte Staubkonzentration erhöht die Standzeit des Filters auf das ca. 3-fache.

Die V-Anordnung der Filterpanels (12), die Besetzung von max. 4 Seiten des Rechtecks oder des Umfangs des Zylinders vermindert das Bauvolumen des Filtersystems auf ca. 2/3.

Die Elemente der Module bilden eine dreh-und biegesteife Struktur mit integrierten Schalldämpferkulissen.

Die aufwendige Stahlstützkonstruktion fällt weg.

FIG. 2

a) Schnitt A-A

b) Schnitt B-B

Anströmung des Filtermoduls

FIG. 3

Draufsicht auf senkrecht angeordnetes FILTERMODUL

**Selbstreinigendes Filter für gasförmige Medien Kompakt-System mit Staubeintrittsüberhöhung**

Verfahren und Ausführung dazu

1. Stand der Technik

Selbstreinigende Filtersysteme gibt es seit mehreren Jahren, auch in der Anwendung beispielsweise für den Lufteintritt bei Gasturbinen.

Sie werden überwiegend durch pulse-jet-cleaning, also durch Erzeugung von Überschallwellen gereinigt, neuerdings auch durch Düsenstrahlen mit Absaugung in liegender Anordnung. Es hat sich gezeigt, daß die Effektivität der Reinigung durch Anwendung von Überschallwellen, als auch bei Fehlen einer Absaugung der abgelösten Staubteilchen, zu wünschen übrig läßt, weil durch die Rezirkulation von abgereinigtem und fallendem Staub ein Teil der Partikel ab einer bestimmten Fallhöhe wieder angesaugt wird und das Filter erneut beaufschlagt. Dadurch wird sowohl die Standzeit des Filters verkürzt und die notwendigen Reinigungszyklen vergrößert. Beides vermindert die Wirtschaftlichkeit der auf dieser Basis arbeitenden Filtersysteme.

Insgesamt ergeben sich folgende Nachteile:

1.1 Die benötigte sehr große Filterfläche, insbesondere durch die Rezirkulation des Staubes und hervorgerufen durch tote Winkel bei der Faltung des Filtermediums -sternförmig bei Filterpatronen - führt zu erheblichem Platzbedarf für die zu filternden gasförmigen Medien, d.h. auch zu hohen Anlagekosten.

1.2 Die notwendige Stahl-Stützkonstruktion wird sehr aufwendig. Das gesamte Filtersystem - Filterhaus - wird sehr teuer.

1.3 Die Ausreinigung der sich, im Falle der Anwendung von Filterpanels in sehr spitzen Winkel gegenüberstehenden Filterflächen, erfolgt schon wegen der ungünstigen Geometrie sehr schlecht. Der bleibende Druckverlust erhöht sich im Laufe der Betriebsdauer.

1.4 In Wüstengegenden, eines der Gebiete, in denen eine Selbstreinigung unabdingbar ist, steht kaum geschultes Personal zur Verfügung. Deswegen ist das Reinigungssystem mit Magnetventilen, elektronischer Steuerung usw., deren Teile sich auch noch im Freien befinden, sehr anfällig und wird kaum gewartet.

Die Ausfallwahrscheinlichkeit ist deswegen sehr groß. Die Folge davon ist ein Zusetzen der Filter in kürzester Zeit (bei Sandstrum innerhalb von 30 min.) und der Ausfall des gesamten Kraftwerkes durch automatisches Abschalten.

1.5 Die unter Ziffer 1.1 geschilderten Vorgänge führen zu einem bleibenden Druckverlust-Anstieg, da die Reinigungszyklen eine restlose Entfernung der Staubpartikel nicht mehr gewährleisten können. Dies wirkt sich in einer Minderung der Gasturbinenleistung aus.

1.6 Im wesentlichen sind die Filtermodule in waagrechter Weise, sogar in mehreren Etagen übereinander angeordnet. Damit befindet sich der abgereinigte Staub je nach Partikelgröße im Schwebezustand und wird durch die aufsteigende Ansaugströmung wieder hochgetragen und geht so zwangsläufig - eben wegen dieser Anordnung, die deshalb nachteilig ist -den Weg wieder zurück in das Filtersystem.

2. Vorschläge zur Verbesserung

Es ist bekannt, daß Staubpartikel sich je nach Größe über die Höhe verteilen, wobei sich die Kleinsten in größeren Höhen befinden.

Weiter wurde ermittelt, daß Sand-und Staubstürme eine Konzentrationsverteilung der Sand-bzw. der Staubpartikel erzeugen, die mit der Höhe ab 6 m stark abnimmt, etwa auf 1/3 des Wertes am Boden.

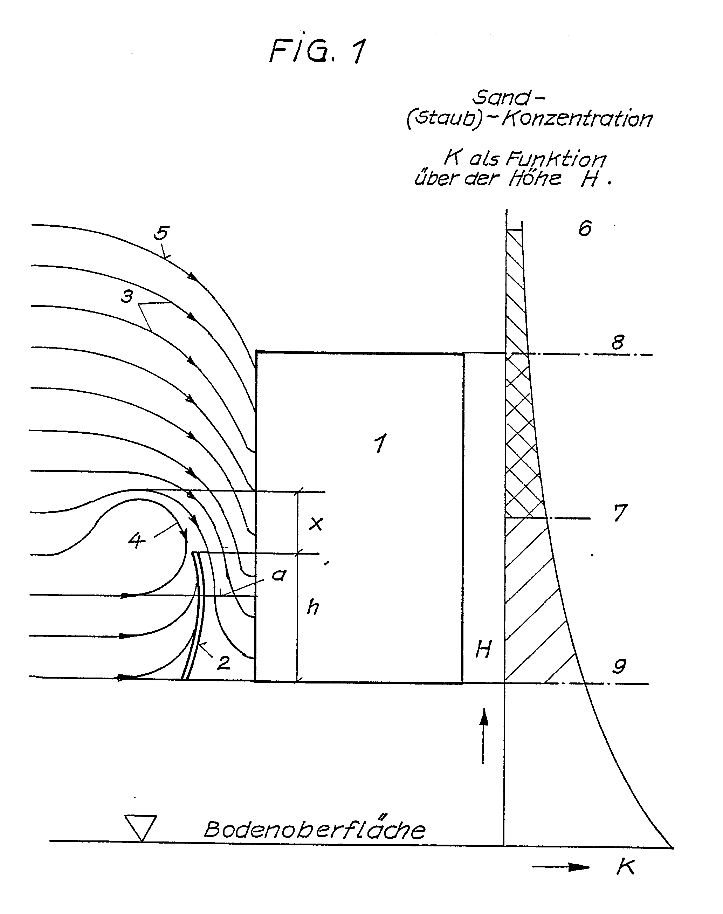

Siehe Fig. 1 - Funktion k = f(H).

Erfindungsgemäß wird,

2.1 die Zuluftführung durch einen - je nach Anordnung ringförmigen, geraden oder rechteckigen - Umlenkkragen (2), der einen Luftwirbel (4) auf der Luv-Seite erzeugt, so gesteuert, daß dadurch, wie im Strömungsbild (4), Luftwirbel (4), Stromfaden (3) und höchster Stromfaden (5) -Fig. 1 - gezeigt, eine **Überhöhung** der Zuströmung stattfindet.

Der Umlenkkragen (2) hat einen Abstand a vom Lufteintrittsfilter (1) und eine Höhe h. Die Höhe h ist im maximalen Fall 1/3 bis 2/5 der Gesamthöhe des Filters (1), der Abstand a bestimmt sich etwa nach a = 0,4 h.

Mit dieser Anordnung wird erreicht, daß Staubpartikel mit der Konzentration der größeren Höhe - und zwar h + x -in den Filter gelangen.

Das erfindungsgemäße Ergebnis zeigt die Graphik nebenan -Fig. 1 -. Verglichen mit dem Filter ohne Umlaufkragen, entsprechend den Konzentrationen an den Stellen (8) und (9), ergibt die neue Anordnung eine Konzentration entsprechend den Stellen (6) und (7).

Die Gesamtkonzentration, die auf die Filter einwirkt, hat dementsprechend im Mittel auf die Hälfte abgenommen, d.h. die Standzeit zwischen zwei Reinigungszyklen vergrößert sich auf das Doppelte oder, bei gleicher Standzeit bzw. bei gleicher Staub-Endbelastung kann die Filterfläche stark reduziert werden.

2.2.Das Filtersystem (1) wird als Vieleck, Zylinder oder als Filterwand mit senkrechten Filtermodulen ausgeführt und steht als Ganzes senkrecht, sodaß sich der größte Teil des Filtersystems (1) in der Zone niedriger Staubkonzentration befindet - Fig. 1 -.

Insgesamt ergibt die Kombination ein Verfahren für die Luftfilterung, mit dem mit einfachsten Mitteln eine Mindestreduktion der Filterfläche auf 2/3 gegenüber den bisher bekannten Systemen erzielt wird.

3. Erfindungsvorschlag als 2. Verfahrensschritt, zur Ausbildung des Verfahrens, mit strömungsgünstiger und kompakter Anordnung für das Filtermodul,
für die
3.1 Beaufschlagung und
3.2 Düsenreinigung und Absaugung

3.1 Beaufschlagung

Das senkrecht angeordnete, V-förmige Filtermodul wird bei Windstille durch die Parallelströmung beaufschlagt. Dabei werden die als Störkörper wirkenden Einbauten (10) unter Staupunktsbildung umströmt. Die Einströmung in das Filtermedium des Filterpanels (12) ist eine Verzögerungsströmung, wie in Fig. 3, obere Hälfte, gezeigt ist.
Bei der Strömung um die Ecke des Körpers (10) tritt eine gewisse Selektion der schwereren Staubteilchen durch Zentrifugalwirkung ein, d.h. diese strömen in den äußeren Teil des V-förmigen Filterpanels (12) ein. Von da sind sie auch leichter zu entfernen. Dieser Effekt unterstützt also die Filterreinigung.

3.2 Düsenreinigung und Absaugung

Ausgangspunkt ist das der Erfindung zugrundeliegende Strömungsmodell, so wie es auf Fig. 2 a) und Fig. 3 anschaulich dargestellt ist.
Aus der daraus folgerichtig abzuleitenden Anordnung der Filterpanels (12) in V-Form (vorzugsweise 60°) ergibt sich sowohl eine kompakte, platz-und raumsparende Konstruktion mit einem Strömungsfeld für den Reinigungsvorgang, das die Staubteilchen **zentral** zur Mittelachse des gleichschenkligen Dreiecks führt - siehe dazu Stromfäden (22,23,24) in Fig. 2 a) und Fig. 3 für die Absaugung und impinging jets (26) für die Düsenstrahl-Reinigung.
Erfindungsgemäß, und nur dann kann dieses Strömungsfeld für das gesamte Filtersystem existieren, ist das Modul **senkrecht** angeordnet und alle Strömungsfelder sind kongruent. Somit fallen **alle** Staubteilchen nach unten, der Schwerkraft folgend und diese Fallrichtung steht im Winkel von 90° zur Anströmrichtung. Die größeren Staubpartikel werden weiter nach außen geblasen und werden im statistischem Mittel häufiger über das Filterelement, die Stegbleche (13), hinausfallen - siehe Stromfaden (22 und 23) -.

4. Durchführung des Verfahrens

4.1 Reinigungsvorrichtung zur Ablösung der Staubpartikel im Filtermedium

Wie in Fig. 2 b) und Fig. 3 anschaulich dargestellt, wird reinluftseitig in das V-förmige Filterpanel (12) ein Frischluft-Zuleitungsrohr-bzw. -Kanal (11), ebenfalls mit dreieckigem Querschnitt angeordnet, mit Schlitzdüsen (18, 19) und/oder Lochdüsen, je nach Erfordernis, versehen. Die Reinigungsluftmenge ist so ausgelegt, daß bei einer Düsengeschwindigkeit bis 70 m/s die Einblas-Luftmenge 7 % der Ansaugluftmenge nicht überschreitet. Wie in Fig. 2 b) dargestellt, wird die Verteilung der Düsen (18,19) bzw. der impinging jets (26) entsprechend der örtlichen Beaufschlagung durch Staubpartikel im Filtermodul so vorgenommen, daß nach innen und nach unten die größeren Reinigungsluftmengen geführt werden. Die Strahlreinigung nützt dabei den "impinging-jet-Effekt" aus, d.h. die Geschwindigkeitsverteilung bei der Umlenkung des Strahls (26), der eine gleichmäßige Verteilung an der Oberfläche des Filtermediums bewirkt; vorteilhaft und in konsequenter Verfolgung des gewählten Prinzips werden die Faltungen des Filtermediums wie das Filterpanel selbst senkrecht angeord net, sodaß abgelöste Staubpartikel entsprechend der Schwerkraft nach unten fallen können. Ein oberes und unteres Stegblech (14), das mit dem luftführenden Kanal (11) fest verbunden ist, begrenzt ein Filtermodul und bildet in sich zugleich die Struktureinheit, welche dem Filtersystem insgesamt die Festigkeit verleiht.

4.2 Die Absaugeeinrichtung

Zur Absaugung der sich ablösenden und vom Luftstrom mitgetragenen Staubpartikel dienen die seitlichen Schlitze (17), die sich im Scheitel des V befindlichen Schlitze (16) und die stirnseitigen Schlitze (15). Gezeichnet ist eine gleichmäßige Verteilung dieser Schlitze im Absaugekanal (10). Vorteilhaft kann jedoch eine solche Anordnung gewählt werden, die den Fallweg der Partikel ohne Wiederansaugung in Rechnung stellt. Dazu können die beiden oberen Schlitze (17) in Wegfall kommen und dementsprechend kann sich die Sauggeschwindigkeit, d.h. der Unterdruck in den übrigen Schlitzen erhöhen. Den oberen und unteren Abschluß des Filtermoduls bilden die abgekanteten Stegbleche (13), die mit Durchtrittsöffnungen (20 u. 21) für den anfallenden Staub ausgestattet sind.

Jeder zweite Dreieckskanal (10) ist dabei zur besseren Zugänglichkeit für die Befestigung der Filterpanels (12) mit den Stegblechen (13) lösbar verbunden, während der benachbarte jeweils verschweißt ist und einen stabilen Verband mit der Struktur des reinluftseitigen Teils - Kanal (11) und Stegbleche (14) - bildet.

Die Filterpanels (12) werden in bekannter Weise mit Dichtstreifen abgedichtet und sind von außen einsetzbar, von wo sie auch ausgewechselt werden können. Die Befestigung erfolgt mit Schnappverschlüssen, welche die Anpressung in die Dichtung des Aufnahmerahmens gewährleisten.


5. Anordnungsbeispiele für die Ausführung des Verfahrens

5.1 Grundform - Viereck - allseitig und dreiseitig beaufschlagt.

Die Module, wie in Fig. 2 und Fig. 3 gezeigt, können in einfacher Weise an einem Rechteckumfang angeordnet werden, wobei die längere Seite des Rechtecks senkrecht zur Hauptströmrichtung steht.

Dabei kann in raumsparender Weise der Anschlußkanal mit dem notwendigen Schalldämpfer in das Rechteck-Gehäuse des Filter-Systems hineinragen. Dadurch wird nicht nur Platz gespart, sondern die Dämpfung des Filtergehäuses und der Filtermodule ausgenutzt. Die Einlaßöffnung ist annähernd düsenförmig ausgestaltet, sadaß eine geordnete Zuströmung in die Kulissen des Schalldämpfers erfolgt.
Diese Anordnung ist vorteilhaft mit dem Umlenkkragen, hier in Rechteckanordnung, ausgestattet, um für diesen Fall, da sich Filtermodule unterhalb des Eintrittskanals der Gasturbine befinden, die Zuströmüberhöhung auszunutzen.


5.2 Grundform - stehender Zylinder.

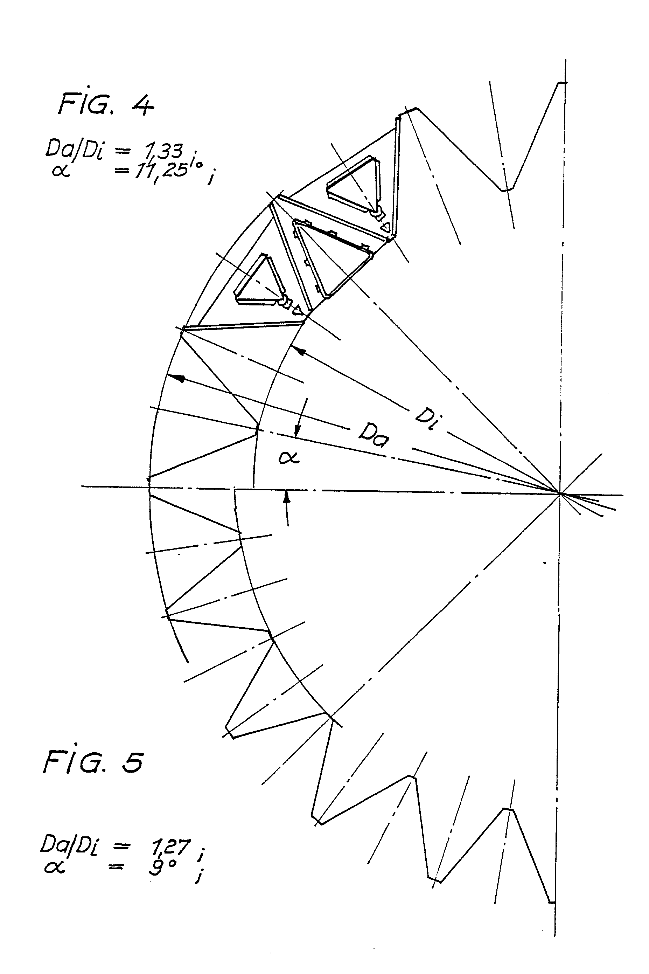

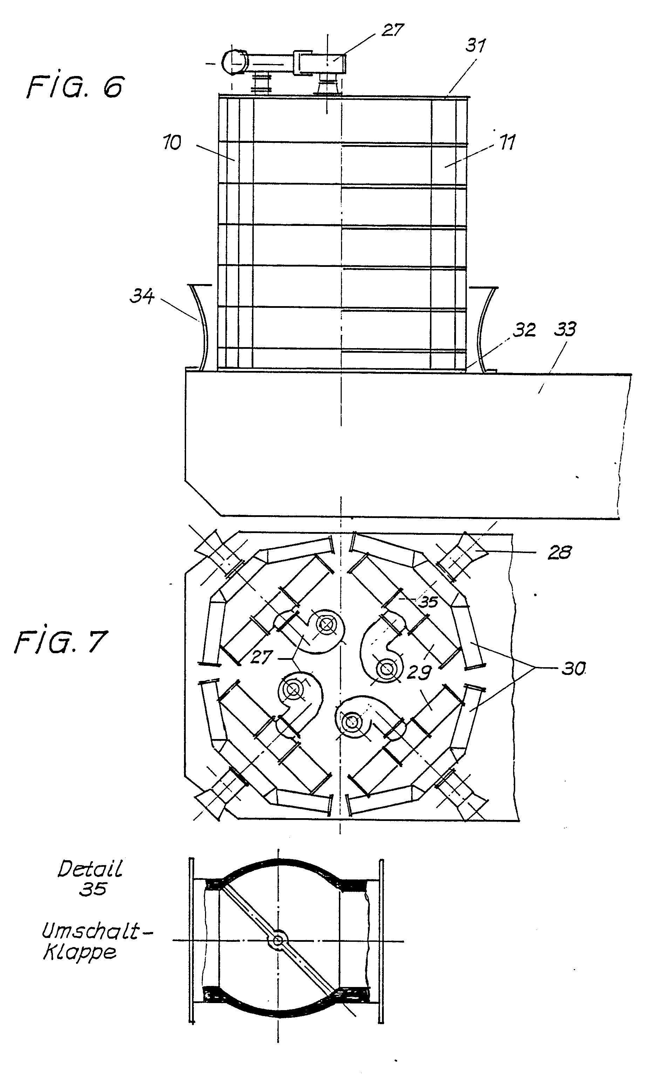

Aus Fig. 4, Teilung entsprechend einem Winkel $\alpha = 11,25°$, aus Fig. 5, Teilung entsprechend einem Winkel $\alpha = 9°$, sind die geometrischen Verhältnisse einschließlich Reinigungskanälen (11) und Absaugekanälen (10) ersichtlich. Gleichzeitig kann daraus errechnet werden, daß durch die V-förmige Anordnung der Filterpanels (12) im Vergleich zu einer Anordnung am Umfang die wirksame Filterfläche um den Faktor 1,6 bzw. 1,77 erhöht werden kann. Dies bedeutet eine gleiche Reduktion im Bauvolumen und mind. die gleiche im Preis für einen gegebenen Anwendungsfall. Die Anordnung dieser Grundform ist beispielsweise für einen Gasturbinen-Lufteintritt in Fig. 6 und Fig. 7 gezeigt.

Dabei bedeuten:
(10) Absaugkanal, zugleich Teil der Struktur
(11) Reinigungskanal, zugleich Teil der Struktur
(13) Stegblech mit Abkantung - anströmseitig -
(14) Stegblech - Reinigungsseite -
(31) Obere Deckplatte
(32) unterer Abschlußring

Die Bauteile nach Ziffern (10,11,13,14,31,32) stellen den gesamten Strukturverband dar, der in sich steif ist und sämtliche Beanspruchungen, insbesondere die Windlast aufnimmt. Diese Konzeption bringt einen Wettbewerbsvorteil, da sie einfacher und billiger ist als die herkömmlichen, voluminösen sogenannten Filterhäuser.

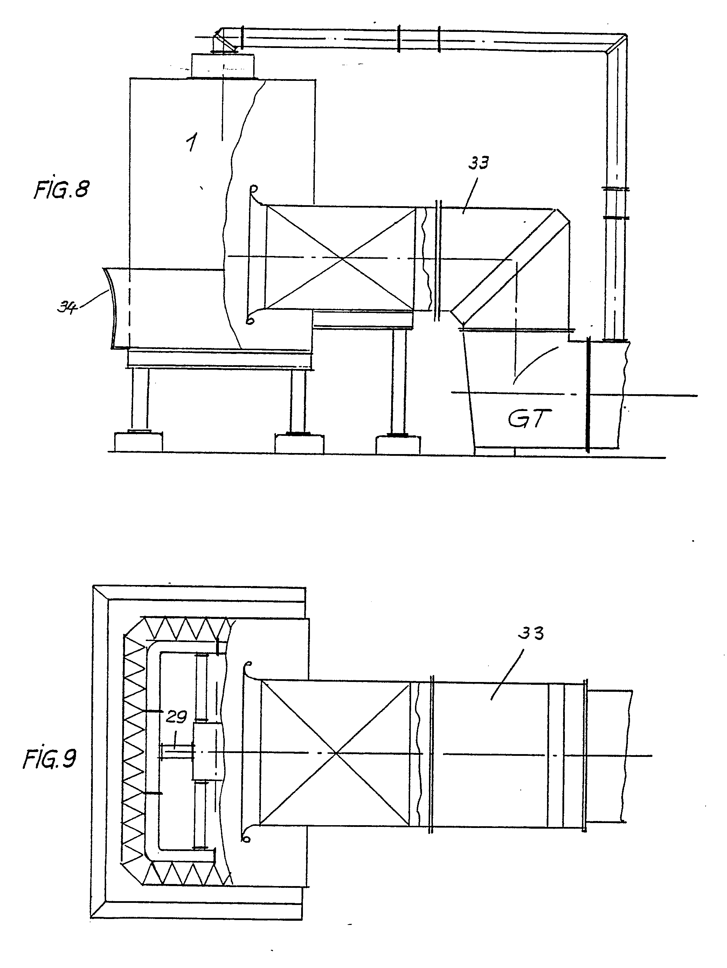

(33) ist der Lufteintrittskanal zur Gasturbine - als Beispiel -. Siehe Fig. 8 und Fig. 9.
In ihm befindet sich der Kulissenschalldämpfer.
(34) ist der Umlenkkragen zur Zuströmüberhöhung.

Das Gebläse (27) fördert die vom Plenum des Filtersystems angesaugte Reinluft über eine Verteilleitung (28) in den Reinigungsluftkanal (11). Für jeden 90°-Sektor ist ein solches Gebläse vorgesehen, welches durch den Befehl eines Druckwächters anläuft und bei Erreichen des vorgegebenen Unterdrucks wieder ausgeschaltet wird. Zur Verringerung des Leistungsaufwandes kann zusätzlich eine Umschaltklappe, wie im Detail (35) gezeigt, in die Verteilleitung (29) eingebaut werden, sodaß nur ein Sektor von 45° beaufschlagt und gereinigt wird. Damit wird der Leistungsaufwand halbiert, d.h. es wird ein kleiner dimensioniertes Gebläse (Gebläsegruppe) (27) mit max. ca 4 % der Ansaugluftmenge der Gasturbine benötigt. Selbstverständlich ist in Wüstengegenden oder Gebieten mit aggressiver Luft (Salz) die Gebläsegruppe überdacht.

Vom Bauaufwand am einfachsten ist folgende Anordnung -nicht gezeichnet -:
Ein zentrales Gebläse (27). Dies fördert in einen Sammelraum, zentral und über dem Gebläse (27) angeordnet. Von diesem Sammelraum zweigen 8 Rohrleitungen ab, die klappengesteuert sind. Beaufschlagt wird immer nur ein Sektor von 45°. Dies vermindert en Bauaufwand für die Gebläse auf 1/4 mit dem Mehraufwand der billigen Klappen, samt Steuerung. Die Regelorgane sind gekapselt und wartungsfrei auszuführen.

Auf der Absaugeseite fördert das Axialgebläse (28) über eine Sammelleitung die staubhaltige Luft für jeden 90°-Sektor nach außen.

Gebläse (28) und Sammelleitung (30) sind unten angeordnet, und zwar auf dem Lufteintrittskanal (33).

Bei Verwendung des Umlenkkragens (34) wird die Verteilleitung (30) vorteilhaft etwa 1 m über dem oberen Ende des Umlenkkragens (34) angeordnet oder der Kragen über dieser Verteilleitung (30) vorgesehen, d.h. die wirksame Filterfläche des stehenden Zylinders um die entsprechende Höhe hochgesetzte.

Selbstverständlich kann am Umfang wie üblich ein Vogelschutzgitter etc. montiert werden. Zur Wartung werden entsprechende Leitern fest montiert oder einhängbar an der oberen Abschlußplatte (31) vorgesehen.

## Ansprüche

1. Verfahren zur Verminderung der Staubbelastung von Filtersystemen dadurch gekennzeichnet, daß bis zu einer Höhe von maximal 40 % des Lufteintrittes ein Umlenkkragen angeordnet ist.

2. Verfahren nach Anspruch 1 dadurch gekennzeichnet, daß durch diesen Kragen ein stehender Luftwirbel erzeugt wird, der eine Zuströmüberhöhung des Lufteintritts in das Filtersystem erzeugt.

3. Verfahren nach Anspruch 1 und 2 dadurch gekennzeichnet, daß durch die Zuströmüberhöhung unter Ausnutzung der rapiden Abnahme der Staubkonzentration mit der Höhe eine Abnahme der Staubbelastung der Filter erfolgt und dementsprechend die Filterfläche bei gleicher Standzeit verkleinert werden kann.

4. Verfahren zur Selbstreinigung von Filtersystemen mit Düsenstrahlen - impinging jets (26)-und Absaugevorrichtung dadurch gekennzeichnet, daß die Reinigungskanäle (11) und die Absaugekanäle (10) in strömungsgünstiger Weise mit dem V-förmig angeordnetem Filterpanel (12) ein kombiniertes Strömungsfeld ergeben, in dem zwangsläufig kürzeste Wege, insbesondere für die Absaugevorgänge der Staubteilchen induziert werden und sich alle Absaugeschlitze (15,16,17) im Kern des durch die geometrische Anordnung - Öffnungswinkel ca. 60° - einstellenden Strömungsfeldes befinden.

5. Verfahren nach Anspruch 4 dadurch gekennzeichnet, daß jedes Modul des Filtersystems und das System selbst, die zugehörigen Elemente - Reinigungskanal (11), Absaugekanal (10), Faltung der Filterpanels (12) -senkrecht-, also entsprechend der Schwerkraftwirkung auf die Staubpartikel und 90° zur Hauptanströmrichtung angeordnet ist und dadurch die Absaugewirkung ohne Rezirkulation der Staubpartikel gewährleistet ist.

6. Verfahren nach Anspruch 4 und Anspruch 5 dadurch gekennzeichnet, daß das Filersystem durch die senkrechte Anordnung über alle Module kongruente Strömungsfelder aufweist und dadurch die senkrechte Anordnung die Abnahme der Staubkonzentration mit der Höhe ausgenutzt wird.

7. Verfahren nach Anspruch 4, Anspruch 5 und Anspruch 6 dadurch gekennzeichnet, daß die zu reinigende Ansaugluft durch die Anordnung und die Gestalt des Absaugekanals (10) umgelenkt wird und dadurch die schwereren und größeren Staubpartikel nur in die äußeren Teile des Filterpanels (12) gelangen und von dort entsprechend den Fallgesetzen beim Reinigungsvorgang durch den impinging-jet-Effekt abgeschleudert werden und überwiegend zu Boden fallen ohne der Rezirkulation entsprechend den Fallgesetzen bei der Bewegung quer zur Einströmung zu unterliegen.

8. Verfahen nach den vorhergehenden Ansprüchen 4 bis 7 dadurch gekennzeichnet, daß durch die V-Anordnung und die senkrechte Anordnung des Filtersystems der Bauaufwand, ausfgedrückt durch die benötigte wirksame Filterfläche insgesamt um den Faktor 1,7 bei mittlerer und um den Faktor 3 bei hoher Staubkonzentration der Umgebungsluft (Staubsturm und Sandsturm) herabgesetzt wird.

9. Verfahren nach den vorhergehenden Ansprüchen 4 bis 8 dadurch gekennzeichnet, daß entsprechend einer mittleren Rezirkulationsfallhöhe von 0,75 m die Absaugeschlitze in den Absaugekanälen (15,16,17) und (10) erst ab einer Höhe, bezogen auf jedes Modul von 0,8 x Rezirkulations-Fallhöhe beginnen und damit der Leistungsaufwand und die Baugröße des gesamten Absaugesystems erheblich reduziert werden kann.

10. Verfahren nach den vorhergehenden Ansprüchen 4 bis 9 dadurch gekennzeichnet, daß die Verteilung der Düsenöffnungen (18,19) für die Reinigungsluft in der Weise erfolgt, daß im unteren und im inneren Bereich des Filtermoduls engere Querabstände der Düsen (18,19) und engere Höhenabstände mit größerem Ausblasequerschnitt entsprechend der höheren Staubbelastung an diesen Stellen vorgesehen sind und die Düsenquerschnitte mit der Höhe des Gesamtfiltersystems aus dem gleichen Grund abnehmen.

11. Ausführung nach den Verfahren gemäß vorhergehenden Ansprüchen 4 bis 10 dadurch gekennzeichnet, daß die Filtermodule mit 60° Öffnungswinkel (Bereich ∓ 10°) an einer bis zu 4 Seiten eines rechteckigen Gehäuses - Plenum - angeordnet sind, wie beschrieben, und der Anschlußkanal (33), z.B. Lufteintritt in eine Gasturbine, etwa mit 1/2 bis 2/3 der Höhe dieses Kanals (33) in das Sammelgehäuse (Plenum) ragt und die Einmündung einen Düseneinlauf besitzt, wobei dieser Kanal (33) in raumsparender Weise und zur Verbesserung der Schalldämmung durch das Filtergehäuse selbst, innerhalb dieses Gehäuses mit Schalldämpfer-Kulissen ausgestattet ist.

12. Ausführung nach den Verfahren gemäß vorhergehenden Ansprüchen 4 bis 10 dadurch gekennzeichnet, daß die Filtermodule um ein stehendes, zylindrisches Gehäuse angeordnet sind, das in sich biege-und verwindungssteif ist und dessen Festigkeit durch den Verbund der Reinigunskanäle (11), der Absaugekanäle (10), der Stegbleche (13, 14) pro Modul als Baustein, materialsparend, gewährleistet wird.

13. Ausführung nach den vorhergehenden zwei Ansprüchen 11 und 12 dadurch gekennzeichnet, daß jeder zweite Absaugekanal (10) herausnehmbar gestaltet ist und mit Schnellverschluß befestigt werden kann, wofür an beiden Enden zylindrische Übergangsstücke eingeschweißt sind.

14. Ausführung nach den vorhergehenden drei Ansprüchen 11, 12 und 13 dadurchgekennzeichnet, daß ein zentrales Gebläse (27) für die Reinigungsluft auf dem Dach des Filtergehäuses vorgesehen ist, das in einen darüber angeordneten, zentrischen Sammelraum fördert und zu den einzelnen Sektoren die Reinigungsluft durch gesteuerte Klappen liefert, wobei die Auslegung des Gebläses für einen Sektor erfolgt und 4 % der Ansaugluftmenge bei einer Düsengeschwindigkeit von 70 m/s nicht überschreitet.

# FIG. 1

Sand -
(Staub) - Konzentration

K als Funktion
über der Höhe H.

Bodenoberfläche

FIG. 2

a) Schnitt A-A

b) Schnitt B-B

Anströmung des Filtermoduls

FIG. 3

Draufsicht auf senkrecht angeord-netes FILTERMODUL

## FIG. 4

$Da/Di = 1,33$ ;
$\alpha = 11,25^{\circ}$ ;

$Di$

$Da$

$\alpha$

## FIG. 5

$Da/Di = 1,27$ ;
$\alpha = 9^{\circ}$ ;

FIG. 6

FIG. 7

Detail
35

Umschalt-
Klappe

**FIG.8**

1

33

34

GT

**FIG.9**

29

33